# EUROPEAN PATENT APPLICATION

(11) **EP 4 254 773 A1**
(43) Date of publication of application: **04.10.2023**
(21) Application number: 22192036.6
(22) Date of filing: 24.08.2022
(51) Int. Cl.: H02P 9/02, H02J 3/00

(54) **PARALLEL CONTROL SYSTEM OF ENERGY SAVING BRUSHLESS MICRO KINETIC POWER GENERATION DEVICE AND MAINS POWER SUPPLY DEVICE**

(30) Priority: 01.04.2022 TW 111112775
(71) Applicant: Lifetrons Switzerland Holdings Limited, Tuen Mun (HK)
(72) Inventor: Tseng, Chih-Ming, 350009 Miaoli County (TW); Tsai, Jui-Ming, 821005 Kaohsiung City (TW)
(74) Representative: Lang, Christian

(57) **Abstract**

The present disclosure provides a control system (10) in which an energy-saving brushless micro-kinetic energy generating device (120) is connected in parallel with a main power supply device (110). The control system detects the actual power consumption of the load end (100), so that the control system can drive the dual power switch (140) according to the power consumption of the load end (100). An energy-saving brushless micro-kinetic energy generator or a main power supply generator is selected for power supply, so that users can achieve the effect of energy saving.

## Description

### CROSS-REFERENCE TO RELATED APPLICATIONS

This application claims the benefit of TW Patent Application No. 111112775, filed on April 01, 2022, which is incorporated in its entirety by reference herein.

### FIELD OF THE INVENTION

The present invention relates to the field of generator device operation and control, particularly relates to a control system in which an energy-saving brushless micro-kinetic power generation device is connected in parallel with mains power supply device, wherein the parallel control system can drive the switch according to the power consumption at the load end, and select an energy-saving brushless micro-kinetic power generation device or mains power supply device for power supply, so as to enable the user to achieve the effect of energy saving.

### BACKGROUND OF THE INVENTION

At present, with the increase of market demand, the energy and environmental crisis has gradually affected the important problem of human sustainable development. The utilization of renewable energy is the fundamental way to solve this problem. With the maturity of renewable energy power generation technology such as solar power generation and wind power generation, more and more renewable energy power generation systems are connected to the power grid in a decentralized manner to meet people's daily production and living needs. As the supplement of regional power supply mode, the power generation system dominated by wind power and solar power represents the new development direction of power system. The current household power supply system is provided by the power equipment of the power supply authority. The two green energy sources, solar power generation and wind power generation, must be converted into AC power through the inverter system and then provided to household electrical products for use. The overall installation cost is high, and the popularization of household is relatively low.

With the development of new energy power generation technology, independent power generation systems increasingly use new energy power generation devices such as wind and solar energy to supply power in parallel with traditional mains power, to improve the economy of power generation, reduce environmental pollution and enhance the self-sufficiency of power supply in remote areas. However, how to accurately control the timing of switching is a problem to be solved when the independent power generation system and mains power supply are connected in parallel.

In addition, considering the trend of energy conservation and carbon reduction, it may cause the risk of a significant increase in the supply cost of traditional mains power. Therefore, a control system that can integrate all kinds of green energy in parallel with traditional mains power is needed.

### SUMMARY OF THE INVENTION

According to the needs of the prior art, the present invention provides a parallel control system of an energy-saving brushless micro-kinetic power generation device and mains power supply device 10. A parallel control system is that a first end of a dual power switch 140 connects an energy-saving brushless micro-kinetic power generation device and micro-kinetic power generation in parallel 120, and a second end of the dual power switch 140 is connected to a load end 100, the characterized is in that the control module 130 is composed of a control device 131, a memory device 133 and a governor 135, wherein a first end of the control device 131 is connected with a third end of the dual power switch 140; a second end of the control device 131 is connected with the load end 100; a third end of the control device 131 is connected with the memory device 133; and a fourth end of the control device 131 is connected with the governor135, and the other end of the governor 135 is connected with an input power supply of the energy-saving brushless micro-kinetic power generation device 120, wherein the governor 135 adjusts the input power supply power rate of the energy-saving brushless micro-kinetic power generation device 120 according to the power consumption of the load end 100.

In the preferred embodiment of the present invention, the dual power switch 140 has a switching end, and the switching end is electrically connected with the control device 131.

In the preferred embodiment of the present invention, the energy-saving brushless micro-kinetic power generator 120 is composed of a plurality of single machine module brushless micro-kinetic power generators 200 connected in series.

In the preferred embodiment of the present invention, a plurality of single machine module brushless micro-kinetic power generators 200 is connected in series through a rotating shaft 203.

In the preferred embodiment of the present invention, the single machine module brushless micro-kinetic power generator 200 includes a stator core 205 and a pair of first rotors 212-1 and second rotors 212-2 arranged on both sides of the stator core 205 at adjacent intervals. The first rotor 212-1 and the second rotor 212-2 are fixedly connected to both sides of the stator core 205 through a connecting device 210.

In the preferred embodiment of the present invention, the governor 135 is used to adjust the speed of the first rotor 212-1 and the second rotor 212-2 in the energy-saving brushless micro-kinetic power generation device 120.

In the preferred embodiment of the present invention, the stator core 205 is a hollow disc body 211, and a plurality of adjacent positioning slots 213 are arranged on both sides of the disc body 211 around the hollow, and a high back electromotive force winding is arranged on the positioning slot 213.

In the preferred embodiment of the present invention, the number of coils on the winding group 214 of high back electromotive force winding is 24.

In the preferred embodiment of the present invention, the permanent magnets on the first rotor 212-1 and the second rotor 212-2 are 16 stages.

In the preferred embodiment of the present invention, an excitation device is further configured in the energy-saving brushless micro-kinetic power generation device 120 to adjust the excitation current of the energy-saving brushless micro-kinetic power generation device 120.

Then, another object of the invention is to provide a parallel control system, which is composed of an energy storage battery pack 300, an energy-saving brushless micro-kinetic power generation device 120 and a mains power supply device 110 connected in parallel by a control module 130, and provides the power required by a load end 100 through a dual power switch 140, the characterized is in that the control module 130 is composed of a control device 131, a memory device 133 and an inverter device 137, a first end of the control device 131 is connected with one end of the dual power switch 140; a second end of the control device 131 is connected with the load end 100; a third end of the control device 131 is connected with the memory device 133; a fourth end of the control device 131 is connected with the dual power switch; and a fifth end of the control device 131 is connected with one end of the inverter device 137; the other end of the inverter device 137 is connected with an output terminals of the energy-saving brushless micro-kinetic power generation device 120 and the energy storage battery pack 300; the dual power switch 140 is further connected with the output terminals of mains power supply device 110 and the inverter device 137. Among them, the inverter device 137 adjusts the DC input power supply of the energy-saving brushless micro-kinetic power generation device 120 or energy storage battery pack 300 to the power consistent with the mains power supply device through the boost circuit according to the power demand of the load end 100.

In the preferred embodiment of the present invention, the energy storage battery pack 300 is an energy storage module of solar panel 115 or an energy storage battery pack 300 formed by lithium iron phosphate battery.

In the preferred embodiment of the present invention, the energy-saving brushless micro-kinetic power generator is composed of several single machine module brushless micro-kinetic power generators connected in series.

According to the above description, the parallel control system of the invention can drive the switch according to the power consumption of the load end to select an energy-saving brushless micro-kinetic power generation device 120 or a mains power supply 110 device for power supply, so as to enable the user to achieve the effect of energy saving.

At the same time, the parallel control system of the present invention can not only save the electricity cost of using mains power supply device, but also greatly increase the stability and appropriateness of the parallel control system.

The energy-saving brushless micro-kinetic power generation device 120 disclosed by the invention can generate power more than multiple of the total by providing only a small amount of power. In particular, the invention can also form an energy-saving of power multiplication system (ESPMS) through structural elastic design, which can be applied to all kinds of high-power consumption products, such as electric vehicles, household power supply, industrial power, etc.

### BRIEF DESCRIPTION OF THE DRAWINGS

FIG.1 is a system architecture schematically showing a parallel control system of an energy-saving brushless micro-kinetic power generation device and mains power supply device of the present invention.
FIG.2 is a structural schematically of a single machine module brushless micro-kinetic power generator of the present invention.
FIG.3 is a schematically showing the energy-saving brushless micro-kinetic power generation device of the present invention.
FIG.4 is a schematically showing the control flow of the parallel control system of the energy-saving brushless micro-kinetic power generation device and mains power supply device of the present invention.
FIG.5 is a schematically showing another embodiment of the parallel control system of the energy-saving brushless micro-kinetic power generation device and mains power supply device of the present invention.
FIG.6 is a schematically showing a control flow corresponding to the embodiment of FIG.5.

### DETAILED DESCRIPTION OF THE PREFERRED EMBODIMENT

To enable those in the technical field of the present invention to fully understand its technical content, relevant embodiments and embodiments are provided for explanation. In addition, when reading the embodiment provided by the present invention, please refer to the schema and the following description at the same time. The shape and relative size of each constituent element in the schema are only used to assist in understanding the content of the embodiment, not to limit the shape and relative size of each constituent element. In addition, when the elements or devices described in different embodiments of the present invention are represented by the same number, it means that they have the same structure and function. Moreover, the "micro-kinetic power generator" of the present invention refers to the configuration between the magnetic energy of the rotor permanent magnet and the stator winding through a small amount of electric energy input, which can specifically realize the conversion of magnetic energy and mechanical energy and produce more electric energy output.

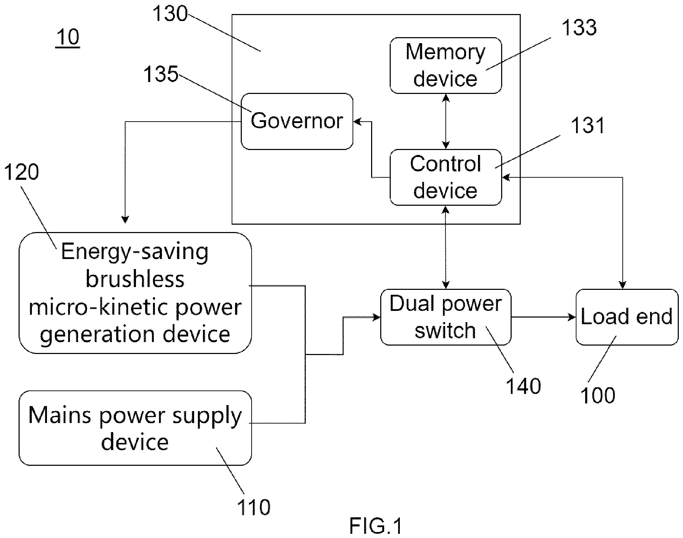

Refer to FIG.1 for the system architecture diagram of a parallel control system of an energy-saving brushless micro-kinetic power generation device and mains power supply device of the present invention. As shown in FIG.1, the parallel control system of the energy-saving brushless micro-kinetic power generation device and mains power supply device 10 of the present invention comprises: the dual power switch 140 has two input terminals, which are respectively connected in parallel with the mains power supply device 110 and the energy-saving brushless micro-kinetic power generation device 120, wherein the input terminal of the energy-saving brushless micro-kinetic power generation device 120 is externally connected with DC power supply, for example, DC power supply converted from a mains power supply is externally connected, and the mains power supply device 110 may be fed to the input of the dual power switch 140 through the power transmission line. In addition, the output end of the dual power switch 140 relates to a load end 100, and the dual power switch 140 also has a switching end (not shown), which is electrically connected with the control device 131 in the control module 130.

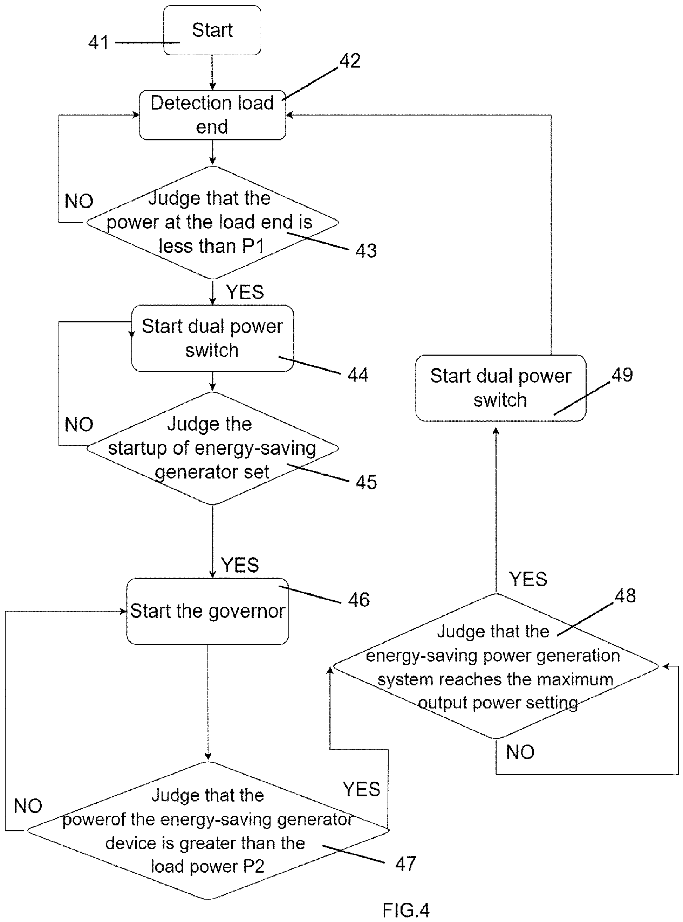

Then, the control module 130 in the parallel control system of the energy-saving brushless micro-kinetic power generation device and the mains power supply device 10 of the invention is composed of a control device 131, a memory device 133 and a governor 135, wherein the first end of the control device 131 is connected with the load end 100 to detect and record the power consumption of the load end 100. The memory device 133 is connected with the second end of the control device 131 to record and store the power consumption value of the load end 100 detected by the control device 131. And, one end of the governor 135 is connected with the third end of the control device 131, and the other end of the governor 135 is connected with the input power supply of the energy-saving brushless micro-kinetic power generation device 120, wherein the governor 135 can adjust the input power supply power of the energy-saving brushless micro-kinetic power generation device 120 according to the power consumption of the load end 100 to ensure that the energy-saving brushless micro-kinetic power generation device 120 can provide the power required by the load end 100, for example, the governor 135 is used to adjust the speed of the first rotor 212-1 and the second rotor 212-2 in the energy-saving brushless micro-kinetic power generation device 120 to make the output power of the energy-saving brushless micro-kinetic power generation device 120 reach the required speed frequency. In addition, in the present invention, an excitation device (not shown) can also be configured in the energy-saving brushless micro-kinetic power generation device 120 to adjust the excitation current of the energy-saving brushless micro-kinetic power generation device 120. The detailed operation process of the parallel control system of the energy-saving brushless micro-kinetic power generation device and the mains power supply device 10 will be described in the flowchart of FIG.4.

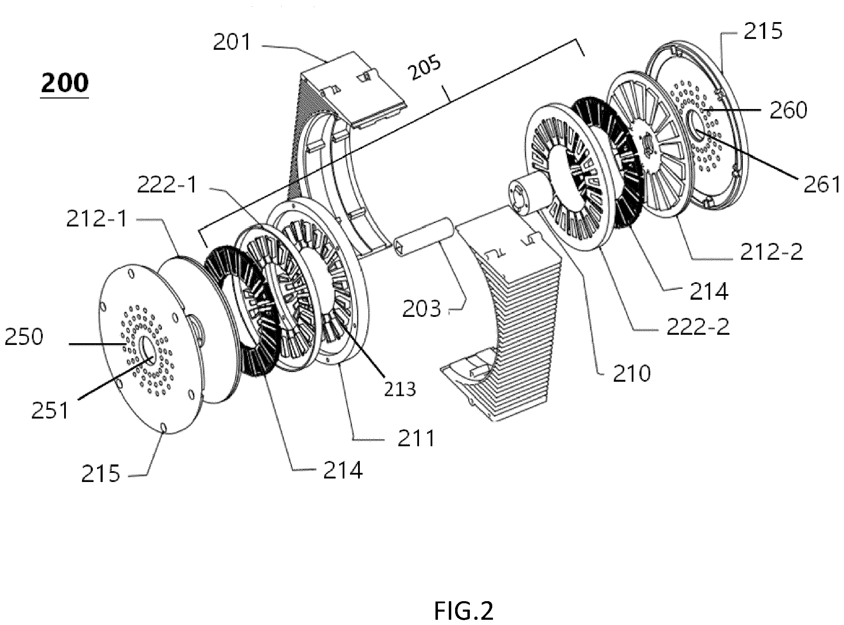

Next, please refer to FIG.2, which is the structural explosion diagram of a single machine module brushless micro-kinetic power generator of the present invention. As shown in FIG.2, the single machine module brushless micro micro-kinetic power generator 200 of the present invention is composed of a stator core 205 and a pair of first rotors 212-1 and second rotors 212-2 arranged adjacent to each other on both sides of the stator core 205, wherein the first rotor 212-1 and the second rotor 212-2 are fixedly connected to both sides of the stator core 205 through a connecting device 210.

In the embodiment of the single machine module brushless micro micro-kinetic power generator 200 of the invention, the stator core 205 is a hollow disc body 211 and is fixedly connected in the housing 201. The stator core 205 is formed by laminating silicon steel sheets, and a plurality of adjacent positioning slots 213 are arranged on both sides of the disc body 211 around the hollow. The silicon steel sheet structure designed by the stator core 205 of the invention increases the heat dissipation space and improves the heat dissipation efficiency. Then, a pair of coil fixed insulating sleeves 222-1 and coil fixed insulating sleeves 222-2 with the same shape and structure as the positioning slots 213 on the stator core 205 are correspondingly arranged on the positioning slots 213 on both sides of the disc body 211 of the stator core 205, and the disc body 211 on the stator core 205 is integrated with the coil fixed insulating sleeve 222-1 and coil fixed insulating sleeve 222-2, wherein, the coil fixed insulating sleeve 222-1 and the coil fixed insulating sleeve 222-2 can choose to use insulating materials. Next, the winding group 214 with multiple coil stages formed by a high back electromotive force winding is configured on the coil fixed insulating sleeve 222-1 and the coil fixed insulating sleeve 222-2 respectively, wherein each coil turn in the winding group 214 with multiple coil stages is corresponding and fixed on the positioning slot 213 with insulating sleeve. Next, the first rotor 212-1 and the second rotor 212-2 arranged adjacent to both sides of the stator core 205 are provided with a plurality of spaced permanent magnets (not shown in FIG.4) only on one side of the winding group 214 of multiple coil stages formed by the high back electromotive force winding. Among them, the winding group 214 of the high back electromotive force winding arranged on the coil fixed insulating sleeve 222-1 and the coil fixed insulating sleeve 222-2 is 24 stages, the permanent magnets on the first rotor 212-1 and the second rotor 212-2 are 16 stages.

Next, a connecting device 210 is provided to pass or penetrate the first end of the connecting device 210 through the hollow part of the stator core 205 without contacting the stator core 205. The grounding device 210 is a hollow cylinder with two ends, the first rotor 212-1 is fixedly connected to the first end of the grounding device 210, and the second rotor 212-2 is fixedly connected to the second end of the grounding device 210, so that the first rotor 212-1 and the second rotor 212-2 are configured on both sides of the stator core 205. The way in which the first rotor 212-1 and the second rotor 212-2 are fixedly connected to the grounding device 210 is the same as the above purpose and will not be repeated. Finally, both sides of the frame 1 are fixedly connected with the first side cover 215 and the second side cover 216 respectively. The central area of the first side cover 215 is provided with a through hole 251 corresponding to the hollow opening part of the first end of the connecting device 210, while the central area of the second side cover 216 is provided with a through hole 261 corresponding to the hollow opening part of the second end of the connecting device 210.

Similarly, in the embodiment of the single machine module brushless micro-kinetic power generator 200 of the present invention, a bearing 250 or bearing 260 is respectively configured in the central area of the first side cover 215 or the second side cover 216. The center of the bearing 250 and the bearing 260 are provided with a through hole 251 and a through hole 261, wherein the through hole 251 of the first side cover 215 corresponds to the hollow opening part of the first end of the connecting device 210, and the through hole 261 of the second side cover 216 corresponds to the hollow opening part of the second end of the connecting device 210. The purpose of configuring bearing 250 or bearing 260 on the first side cover 215 or the second side cover 216 is the same as the above purpose and will not be repeated. In addition, when the brushless micro-kinetic power generation 200 of the single module operates, a rotating shaft 203 can be further configured to penetrate the hollow part of the connecting device 210 and fixed on the connecting device 210. Among them, the fixation method can choose to use a kind of lock fastener, such as a screw.

Then, in the structure of the single machine module brushless micro-kinetic power generator 200 of the present invention, it is further configured with 24-stage high back electromotive force winding group 214 on both sides of the disc body 211 in the stator core 205, so that the single machine module brushless micro-kinetic power generator 200 can have better or higher power generation effect than the general stator core with high back electromotive force winding group only on one side of the disc body 211.

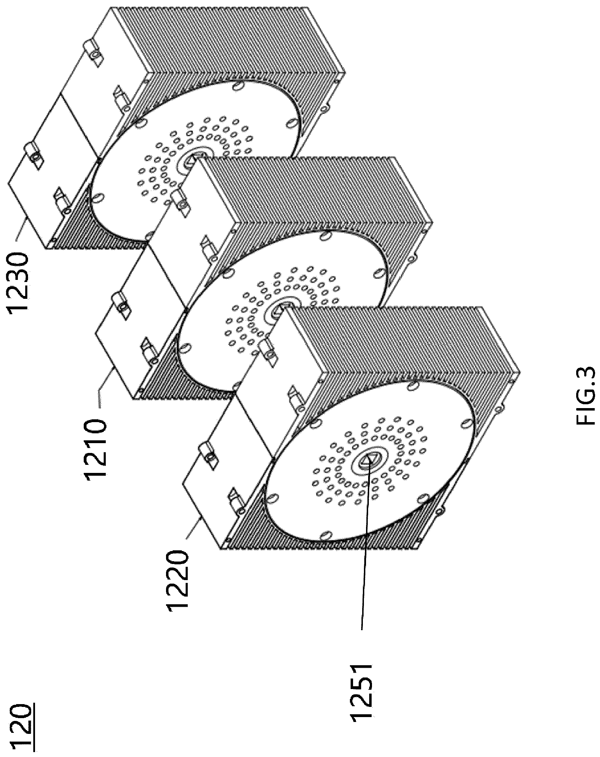

Next, please refer to FIG.3, which is a schematic diagram of the energy-saving brushless micro-kinetic power generation device of the present invention. As shown in FIG.3, the energy-saving brushless micro energy generator device 120 of the present invention is composed of a single machine module brushless micro energy generator 200 in FIG.2. Among them, when the winding group 214 on the stator core 205 in the single machine module brushless micro-kinetic power generator 200 is connected with the input power supply, it can be used as the stand-alone input module 1210 of the energy-saving brushless micro-kinetic power generator 120. When the winding group 214 on the stator core 205 in the single machine module brushless micro energy generator 200 is connected with the load end 100, it can be used as the stand-alone output module 1220 of the energy-saving brushless micro-kinetic power generator 120. In the embodiment of the energy-saving brushless micro-kinetic power generation device 120 of the present invention, a stand-alone input module 1210 is connected in series with at least one single machine output module 1220 using a rotating shaft 203. In a preferred embodiment, a stand-alone input module 1210 is selected, and a stand-alone output module 1220 is configured on both adjacent sides of the stand-alone input module 1210. For example, a stand-alone output module 1220 is configured on the adjacent left side, and a stand-alone output module 1230 is configured on the adjacent right side, a rotating shaft 203 is used to connect the three stand-alone output modules in series through the through hole 1251 on each stand-alone output module. When the stator core 205 in the stand-alone input module 1210 is connected to the power supply, it will drive the rotor 212-1 and rotor 212-2 in the stand-alone input module 1210 to rotate. Then, through the connection of the rotating shaft 203, the stand-alone output module 1220 and the rotor 212-1 and rotor 212-2 in the stand-alone output module 1230 are further driven to rotate. Finally, the output power is generated by the stator core 205 on the stand-alone output module 1230 and the stator core 205 on the stand-alone output module 1230.

As shown in FIG.3, after series connection, with the same voltage source input conditions, after measurement, the output benefit can reach 1.92 times, as shown in the table below.

| Input voltage (DC)/ Current (A) | Output voltage (DC)/ Current (A) | Output benefit (Pt/Pi) |
|---|---|---|
| Stand-alone input module (1210): | Stand-alone output module (1220): | 1.92 |
| | VDC=94.2V | |
| | I=7.2A | |
| | Output power of module 1 (Po1) =678 w | |
| | Stand-alone output module (1230): | |
| VDC=71.9V | | |
| I=10,1 A | VDC=94.8V | |
| Input power (Pi)= 720 w | 1=7.4 A | |
| | Output power of module 2 (Po2) =701.5 w | |
| | Total output power Pt=Po1+Po2=1380 w | |

Through the above description, the energy-saving brushless micro-kinetic power generation device 120 of the present invention can generate power more than the sum multiple when only a small amount of power is provided. In particular, the present invention can also form an power multiplication energy-saving system by connecting a plurality of single machine output modules in series through the rotating shaft 203 through the elastic design of the structure. This power multiplication energy-saving system can be applied to all kinds of high-power consumption products, such as electric vehicles, household power supply, industrial power, etc.

Next, please refer to FIG.4, which is the control flow diagram of the parallel control system of the energy-saving brushless micro-kinetic power generation device and the mains power supply device of the present invention. In the control flow of FIG.4, the output power provided by the energy-saving brushless micro-kinetic power generation device 120 is taken as the control parameter, in which P1 is the maximum output power of the energy-saving brushless micro-kinetic power generation device 120. Therefore, the present invention is used as the basis for switching the energy-saving brushless micro-kinetic power generation device 120 or the mains power supply device 110 according to the detected power consumption value of the load end 100, for example, when the control device 131 in the control module 130 detects that the power consumption value of the load end 100 is less than PI, it means that the energy-saving brushless micro-kinetic power generation device 120 can supply the power consumption of the load end 100. Therefore, the control device 131 will drive the dual power switch 140 to switch from the mains power supply device 110 to the energy-saving brushless micro-kinetic power generation device 120. When the control device 131 in the control module 130 detects that the power consumption value of the load end 100 is greater than PI, it means that the energy-saving brushless micro-kinetic power generation device 120 cannot supply sufficient power consumption of the load end 100. Therefore, the control device 131 will drive the dual power switch 140 to switch from the energy-saving brushless micro-kinetic power generation device 120 to the mains power supply device 110.

Next, the control flow of FIG.4 will be described in detail. First, in the initial stage shown in step 41, it can be set that the system architecture in FIG.1 is connected to the mains power supply 110, so the power demand of the system architecture can be provided.

Next, as shown in step 42, the control device 131 in the control module 130 starts to detect the power consumption value of the load end 100 and stores the detected power consumption value in the memory device 133. In the embodiment of the invention, the control device 131 detects the output power of the load end 100 once per second.

Next, as shown in step 43, the control device 131 will compare the detected power consumption value of the load end 100 with the P1 power value stored in the memory device 133 to determine whether the power consumption value of the load end 100 is less than the P1 power value. When the control device 131 determines that the power consumption value of the load end 100 is less than the P1 power value, it means that the energy-saving brushless micro-kinetic power generation device 120 can supply the power consumption required by the load end 100, and then proceed to step 44.

In step 44, the control device 131 starts the dual power switch 140 and switches the power supply to the load end 100. In the embodiment of this step, starting the dual power switch 140 will switch from the mains power supply device 110 to the energy-saving brushless micro-kinetic power generation device 120, and the energy-saving brushless micro-kinetic power generation device 120 will provide power to the load end 100. Otherwise, when the control device 131 determines that the power consumption value of the load end 100 is still greater than the P1 power value, it means that the energy-saving brushless micro-kinetic power generation device 120 cannot provide the power consumption required to supply the load end 100, and the power supply device 110 remains to provide power to the load end 100.

Then, as shown in step 45, when the dual power switch 140 has been changed from the energy-saving brushless micro-kinetic power generation device 120 to provide power to the load end 100, the control device 131 will judge the startup status of the energy-saving brushless micro-kinetic power generation device 120. In step 45, the control device 131 will detect whether the voltage, current, frequency, phase angle and other data output by the energy-saving brushless micro-kinetic power generation device 120 are stable. When the control device 131 determines that the start of the energy-saving brushless micro-kinetic power generation device 120 is abnormal, it will restart the energy-saving brushless micro-kinetic power generation device 120.

Then, as shown in step 46, when the control device 131 determines that the energy-saving brushless micro-kinetic power generation device 120 is started normally, the control device 131 will start the governor 135 to adjust the speed of the first rotor 212-1 and the second rotor 212-2 in the energy-saving brushless micro-kinetic power generation device 120 through the governor 135, so that the rotor speed in the energy-saving brushless micro-kinetic power generation device 120 is close to the synchronous speed, for example, to make the output power of the energy-saving brushless micro-kinetic power generation device 120 reach the required speed, and the frequency is close to the synchronization with the commercial power. The main purpose is to protect the electrical equipment.

Then, as shown in step 47, the control device 131 determines whether the output power of the energy-saving brushless micro-kinetic power generator 120 is greater than the power consumption of the load end 100. For example, when the detected power consumption of the load end 100 is 5KW, the governor 135 will automatically adjust the speed so that the energy-saving brushless micro-kinetic power generator 120 can ensure that the output power provided by it exceeds 5KW, so as to ensure that sufficient output power can be provided to the load end 100. Otherwise, when the control device 131 determines that the output power of the energy-saving brushless micro-kinetic power generation device 120 is still less than the power consumption of the load end 100, the governor 135 will automatically adjust the speed to provide sufficient output power to the load end 100.

Then, as shown in step 48, the control device 131 will detect the output power of the load end 100 once per second. When the control device 131 determines that the energy-saving brushless micro-kinetic power generation device 120 reaches the set value of the maximum output power P1, it means that the energy-saving brushless micro-kinetic power generation device 120 cannot supply the power consumption required by the load end 100, and proceed to step 49.

In step 49, the control device 131 starts the dual power switch 140 again and switches the power supply to the load end 100. For example, when the control device 131 detects that the output power of the load end 100 exceeds the P1 value set by the power output of the generator, for example, when the P1 set value is 10KW and the actual output power value is 10.1KW, the control device 131 starts the dual power switch 140, switches from the energy-saving brushless micro-kinetic power generation device 120 to the mains power supply device 110, and the mains power supply device 110 provides power to the load end 100. Otherwise, when the control device 131 determines that the power consumption value of the load end 100 is still less than the P1 power value, it maintains the power supplied by the energy-saving brushless micro-kinetic power generation device 120 to the load end 100. Finally, the control device 131 continuously detects the power consumption value of the load end 100 and stores the detected power consumption value in the memory device 133, as shown in step 42. According to the power consumption of the power supply module 130 of the invention, the power consumption of the power supply module 130 in the brushless power supply module 100 can be controlled by the power consumption of the power supply module 130 of the invention, so that the power consumption of the power supply module 130 of the invention can be controlled according to the actual power consumption of the power supply module 130 of the invention.

Next, the present invention further discloses an embodiment of another parallel control system, in particular a control system configured with an energy storage battery pack, an energy-saving brushless micro-kinetic power generation device in parallel with a mains power supply device and an operation method thereof.

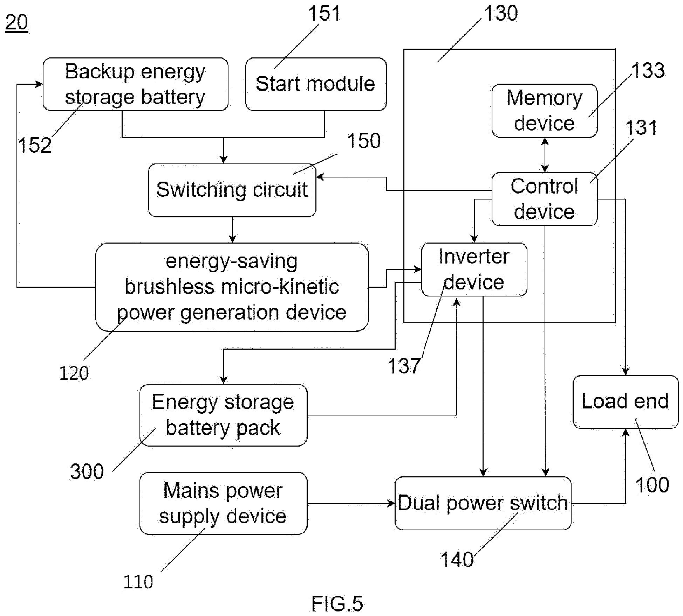

Referring to FIG.5, it is a schematic diagram of the structure of a parallel control system configured with an energy storage battery pack, an energy-saving brushless micro-kinetic power generation device and a mains power supply device of the present invention. As shown in FIG.5, the parallel control system 20 includes: the control module 130 is composed of a control device 131, a memory device 133 and an inverter device 137. The first end of the control device 131 is connected with the load end 100 to detect and record the power consumption of the load end 100. The memory device 133 is connected to the second end of the control device 131 to record and store the power consumption value of the load end 100 detected by the control device 131, the third end of the control device 131 is connected to the end of the dual power switch 140, and the first end of the inverter device 137 is connected to the fourth end of the control device 131. The second end of the inverter device 137 is connected with one end of the dual power switch 140, and the third end of the inverter device 137 is connected to the energy-saving brushless micro-kinetic power generation device 120 and the energy storage battery pack 300. Both the energy-saving brushless micro-kinetic power generation device 120 and the energy storage battery pack 300 output direct current (DC) voltage to the inverter device 137. One end of the dual power switch 140 is connected to the mains power supply 400, which is supplied in the form of AC voltage. And the output end of the dual power switch 140 is connected to the load end 100.

According to the connection structure of the parallel control system 20, the control device 131 in the control module 130 determines whether the inverter device 137 outputs the energy-saving brushless micro-kinetic power generation device 120 or the energy storage battery pack 300 to the dual power switch 140, and then the control device 131 controls the dual power switch 140 to output the energy-saving brushless micro-kinetic power generation device 120, the energy storage battery pack 300 or the mains power supply 400 to the load end 100. In particular, whether the inverter device 137 chooses to output the energy-saving brushless micro-kinetic power generation device 120 or the energy storage battery pack 300 to the dual power switch 140, the inverter device 137 will boost the DC voltage provided by the energy-saving brushless micro-kinetic power generation device 120 or the energy storage battery pack 300 and convert it into AC voltage. Therefore, after the parallel control system 20 of the invention passes through the dual power switch 140, they are all supplied by AC voltage. In addition, after the DC voltage output by the energy-saving brushless micro-kinetic power generation device 120 is boosted by the inverter device 137, it is provided to the dual power switch 140 according to the specification of the mains power supply. Therefore, the parallel control system 20 in this embodiment does not need to use the governor 135 in the parallel control system of the energy-saving brushless micro-kinetic power generation device and the mains power supply device 10 to achieve the effect of protecting electrical equipment.

Next, please continue to refer to FIG.5. One end of the control device 131 can also be connected to a dual power switch 140. When the control device 131 selects to use the energy-saving brushless micro-kinetic power generation device 120 to provide power, a starting voltage needs to be provided. Therefore, a starting voltage can be selected through the dual power switch 140. In this embodiment, the starting voltage can be provided by the solar panel 115 or a standby energy storage battery 152. For example, when the sun sets in the west, the solar panel 115 may not be able to provide sufficient starting voltage. If the standby energy storage battery 152 stores sufficient starting voltage at this time, the control device 131 will drive the dual power switch 140 to connect with the standby energy storage battery 152, it is used as the starting voltage of the energy-saving brushless micro-kinetic power generation device 120, and vice versa.

In the embodiment of the parallel control system 20 shown in FIG.5 of the present invention, the energy-saving brushless micro-kinetic power generation device 120 is the same as the energy-saving brushless micro-kinetic power generation device shown in FIG.2 and FIG.3. Among them, the energy storage battery pack 300 can be a solar energy storage module, such as the energy storage module of a solar panel configured on the roof of a house or factory. Alternatively, the energy storage battery pack 300 may also be an energy storage battery pack formed by a lithium iron phosphate battery. Therefore, the invention does not limit the material combination of the energy storage battery pack 300.

In the embodiment of the parallel control system 20 shown in FIG.5 of the invention, when the energy-saving brushless micro-kinetic power generation device 120 is successfully started, the output DC voltage can be output to the inverter device 137. On the other hand, part of the voltage output by the energy-saving brushless micro-kinetic power generation device 120 can be charged to the energy storage battery pack 300 through the circuit in the inverter device 137, and after the charging is completed, the output voltage is provided depending on the power required by the load end 100. Similarly, after the energy-saving brushless micro-kinetic power generation device 120 is successfully started, the standby energy storage battery 152 can also be charged in another circuit, so that the standby energy storage battery 152 can be maintained in an available state at any time.

Obviously, the operation logic of the parallel control system 20 shown in FIG.5 of the present invention is that when the energy-saving brushless micro-kinetic power generation device 120 meets the power required by the load end 100, the output voltage of the energy-saving brushless micro-kinetic power generation device 120 is supplied to the load end 100. When the energy storage battery pack 300 is appropriate and meets the power required by the load end 100, the output voltage of the energy storage battery pack 300 can be selected to be supplied to the load end 100. Therefore, when the energy-saving brushless micro-kinetic power generation device 120 and the energy storage battery pack 300 can be supplied to the load end 100 through the inverter device 137, the energy storage battery pack 300 can be used as a continuous power device as a power supply device during the restart of the energy-saving brushless micro-kinetic power generation device 120 after the parallel control system 20 switches from the mains power supply 400 to the energy-saving brushless micro kinetic energy generation device 200. Or the power supply device of the load end 100 during the accidental stop and restart of the energy-saving brushless micro-kinetic power generation device 120. Obviously, when the parallel control system 20 shown in FIG.5 of the present invention operates, unless the power demand of the load end is greater than the output voltage of the energy-saving brushless micro-kinetic power generation device 120 or the energy storage battery pack 300, the mains power supply 400 is required to supply the power demand of the load end. Otherwise, the power demand of the load end is supplied by the interactive switching between the energy-saving brushless micro-kinetic power generation device 120 and the energy storage battery pack 300. Therefore, the parallel control system 20 constructed by the invention can effectively achieve the effect of saving the use of mains power supply 400.

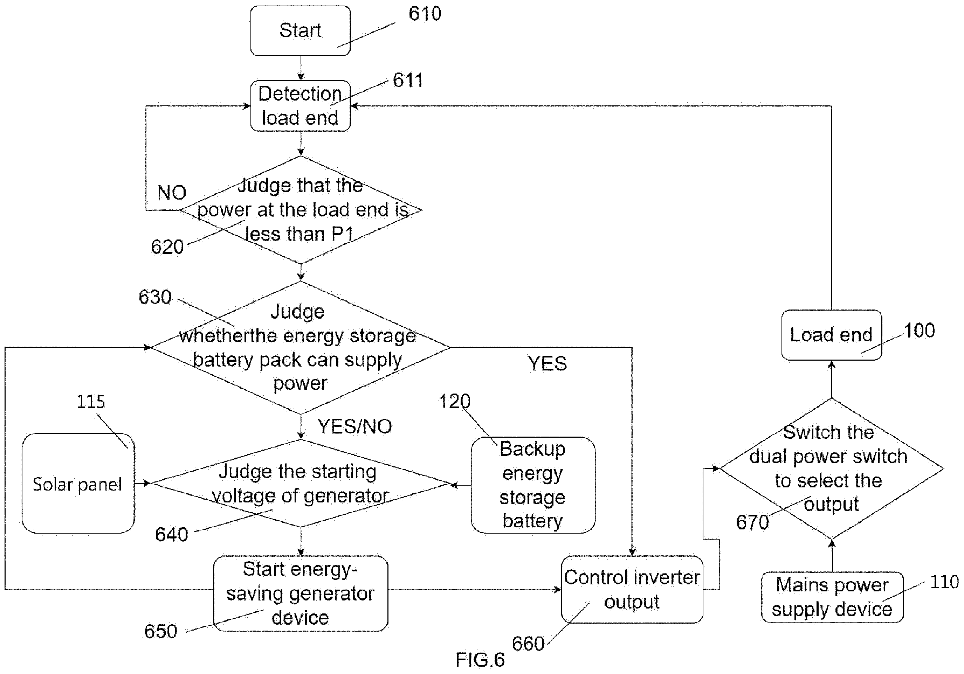

Next, please refer to FIG.6, which is a schematic diagram of the control flow of the embodiment of FIG.5 of the present invention. First, it should be noted that in the embodiment of FIG.5, an energy storage battery pack 300 is further connected in parallel with an energy-saving brushless micro-kinetic power generation device 200, and then controlled in parallel with the mains power supply device 400.

In the control flow of FIG.6, the output power provided by the energy-saving brushless micro-kinetic power generation device 120 and the energy storage battery pack 300 is taken as the control parameter, in which P1 is the maximum output power of the energy-saving brushless micro-kinetic power generation device 120 and the energy storage battery pack 300. Therefore, the invention is used to switch the energy-saving brushless micro-kinetic power generation device 120 according to the power consumption value of the load end 100 detected by the control module 130 For example, when the control device 131 in the control module 130 detects that the power consumption value of the load end 100 is less than PI, it means that the energy-saving brushless micro-kinetic power generation device 120 or the energy storage battery pack 300 can supply the power consumption of the load end 100. Therefore, the control device 131 will drive the dual power switch 140 to switch from the mains power supply device 400 to the energy-saving brushless micro-kinetic power generation device 120 or the energy storage battery pack 300. When the control device 131 in the control module 130 detects that the power consumption value of the load end 100 is greater than PI, it means that the energy-saving brushless micro-kinetic power generation device 120 or the energy storage battery pack 300 cannot supply sufficient power consumption of the load end 100. Therefore, the control device 131 will drive the dual power switch 140 to switch from the energy-saving brushless micro-kinetic power generation device 120 or the energy storage battery pack 300 to the mains power supply device 400. Meanwhile, when the parallel control system 20 of the invention selects the energy-saving brushless micro-kinetic power generation device 120 or the energy storage battery pack 300 to provide the power consumption of the load end 100, when switching back from the mains power supply device 400 to the energy-saving brushless micro-kinetic power generation device 120, the control device 131 will drive the inverter device 137 to provide the power consumption of the load end 100 with the energy storage battery pack 300 until the energy-saving brushless micro-kinetic power generation device 120 is started normally, then, the control device 131 drives the inverter device 137 to switch to the energy-saving brushless micro-kinetic power generation device 120 to provide the power consumption of the load end 100. The control process described above will be described in detail in the following contents.

Next, the control flow of FIG.6 will be described in detail. First, at the beginning stage as shown in step 610, it can be set that the system architecture in FIG.5 is connected to the mains power supply 400, so the power demand of the parallel control system 20 shown in FIG.5 can be provided. At the same time, the energy-saving brushless micro-kinetic power generation device 120 is not started. In addition, in the process of explaining the control flow of FIG.6, please also refer to the architecture of the parallel control system 20 of FIG.5.

Next, as shown in step 611, the control device 131 in the control module 130 continuously detects the power consumption value of the load end 100 and stores the detected power consumption value in the memory device 133. In the embodiment of the invention, the control device 131 detects the output power of the load end 100 once per second.

Next, as shown in step 620, the control device 131 compares the detected power consumption value of the load end 100 with the P1 power value stored in the memory device 133 to determine whether the power consumption value of the load end 100 is less than the P1 power value. When the control device 131 determines that the power consumption value of the load end 100 is less than the P1 power value, if the energy-saving brushless micro-kinetic power generation device 120 or the energy storage battery pack 300 can supply the power consumption required by the load end 100, proceed to step 630.

In step 630, the control device 131 checks whether the energy storage battery pack 300 can provide the power consumption of the load end 100 in real time through the inverter device 137. If the energy storage battery pack 300 can provide the power consumption of the load end 100 in real time, the energy storage battery pack 300 can provide the DC voltage to the inverter device 137. At this time, the control device 131 can choose to directly go to step 660, and select the energy storage battery pack 300 connected in parallel with the inverter device 137 to output the voltage to the dual power switch 140. When the control device 131 confirms that the energy storage battery pack 300 has undergone reverse operation When the inverter device 137 boosts the AC voltage required by the load end 100 , the control device 131 controls the dual power switch 140 to switch the power consumption of the load end 100 from the mains power supply device 400 to the energy storage battery pack 300. For example: when the detected power consumption of the load end 100 is 5KW, the inverter device 137 will automatically boost the DC voltage provided by the energy storage battery pack 300 to an AC voltage of 5KW, so that the energy storage battery pack 300 can ensure that the output power provided by it exceeds 5KW, so as to ensure sufficient output power to the load end 100. In addition, when the energy storage battery pack 300 can provide the DC voltage to the inverter device 137, the control device 131 can also choose to continue to use the mains power supply device 400 to supply the power consumption of the load end 100 instead of directly switching to the energy storage battery pack 300 to supply the load end 100. At this time, the control device 131 may choose to enter the program of starting the energy-saving brushless micro-kinetic power generator 200 in step 640.

Next, refer to step 640. When the control device 131 executes the program of starting the energy-saving brushless micro-kinetic power generation device 120, it will first select the condition of starting the starting power supply of the energy-saving brushless micro-kinetic power generation device 120 through the switching circuit 150. In the embodiment of the invention, the starting power supply of the energy-saving brushless micro-kinetic power generation device 120 includes a solar panel 115 and a backup battery pack 120. For example, in the daytime and with sufficient sunshine, the control device 131 can control the switching circuit 150 to select the voltage of the solar panel 115 to start the energy-saving brushless micro-kinetic power generation device 120. If it is night or insufficient sunshine, the control device 131 can control the switching circuit 150 to select the voltage of the standby battery pack 120 to start the energy-saving brushless micro-kinetic power generation device 120. Therefore, in a preferred embodiment, the control device 131 can be used as the basis for controlling the dual power switch 140 according to the daily time of the location.

Next, please refer to step 650. After the energy-saving brushless micro-kinetic power generation device 120 is started, the control device 131 will continuously detect whether the DC voltage output by the energy-saving brushless micro-kinetic power generation device 120 reaches the set rated value. If the control device 131 judges that the rated value of the output of the energy-saving brushless micro-kinetic power generation device 120 is stable, on the one hand, the output DC voltage can be supplied to the inverter device 137. On the other hand, if the control device 131 detects that the power of the energy storage battery pack 300 is insufficient, the energy-saving brushless micro-kinetic power generation device 120 can charge the energy storage battery pack 300 until the energy storage battery pack 300 is full of standby.

Then, in a better operation process after completing step 650, at this time, the energy-saving brushless micro-kinetic power generation device 120 and the energy storage battery pack 300 connected to the inverter device 137 have the power consumption required to supply the load end 100. At this time, as shown in step 660, the control device 131 can control the inverter device 137 to determine that the energy-saving brushless micro-kinetic power generation device 120 or the energy storage battery pack 300 can convert and boost the DC voltage to the AC voltage with the same phase as the mains power supply device 400 through the boost circuit, and output it to the dual power switch 140.

Finally, as shown in step 670, at this time, the energy-saving brushless micro-kinetic power generation device 120 or the energy storage battery pack 300 and the mains power supply device 400 have been connected to the dual power switch 140. If the control device 131 decides to use the energy-saving brushless micro-kinetic power generation device 120 or the energy storage battery pack 300 as the power supply of the load end 100, the control device 131 controls the dual power switch 140 to switch the output to the energy-saving brushless micro-kinetic power generation device 120 or the energy storage battery pack 300 to supply the power consumption required by the load end 100.

Next, the design advantages of the parallel control system 20 of the present invention will be emphasized. After the energy-saving brushless micro-kinetic power generation device 120 is started in step 650, the control device 131 can control the inverter device 137 to convert and boost the DC voltage to the AC voltage in the same phase as the mains power supply device 400 through the boost circuit, and output it to the dual power switch 140. Then, the dual power switch 140 is controlled to switch from the mains power supply device 400 to the energy-saving brushless micro-kinetic power generation device 120 to supply the power consumption required by the load end 100. After a period of operation, the energy storage battery pack 300 should also reach the set rated value according to FIG.5 and FIG.6. Then, the control device 131 can switch to the mains power supply device 400 or the energy-saving brushless micro-kinetic power generation device 120 to supply the load end 100 at any time through the dual power switch 140 according to the power required by the load end 100. Even at the moment of switching from the mains power supply device 400 to the energy-saving brushless micro-kinetic power generation device 120, the energy-saving brushless micro-kinetic power generation device 120 has an unexpected shutdown or crash, or during the routine maintenance or detection period of the energy-saving brushless micro-kinetic power generation device 120, the parallel control system 20 of the present invention can immediately use the energy storage battery pack 300 for continuous power connection. Obviously, when the parallel control system 20 of the invention has used the energy-saving brushless micro-kinetic power generation device 120 to supply the power required by the load end 100, under normal operation, there is only one condition that needs to be switched to the mains power supply device 400, which is when the power (PI) required by the load end 100 exceeds the power provided by the energy-saving brushless micro-kinetic power generation device 120 or the energy storage battery pack 300, it is necessary to use the mains power supply device 400. Therefore, when various energy crises occur in the future, resulting in a significant increase in the use cost of the mains power supply device 400, the design of the parallel control system 20 of the invention can save a lot of the cost of using the mains power supply device 400, especially for industrial users. In addition, if an unexpected condition occurs, causing the mains power supply device 400 to fail to supply power, and the energy-saving brushless micro-kinetic power generation device 120 cannot supply power in time, it can still supply the load end 100 through the energy storage battery pack 300, so as to strive for various rescue or emergency time. Therefore, the design of the parallel control system 20 of the invention can not only save the electricity cost of using the mains power supply device 400, but also greatly increase the stability and appropriateness of the parallel control system 20.

The above is only a preferred embodiment of the invention and is not used to limit the scope of the rights of the invention. At the same time, the above description should be clear to and implemented by those with general knowledge in the relevant technical field. Therefore, other equivalent changes or modifications not separated from the concept disclosed in the invention should be included in the scope of patent claims of the invention.

## Claims

1. A parallel control system of an energy-saving brushless micro-kinetic power generation device and a mains power supply device (10), which connects the energy-saving brushless micro-kinetic power generation device (120) and the mains power supply device (110) in parallel by the first end of a dual power switch (140), and the second end of the dual power switch (140) is connected to the load end (100), including:
a control module (130) is composed of a control device (131), a memory device (133) and a governor (135),
a first end of the control device (130) is connected with the third end of the dual power switch (140);
a second end of the control device (130) is connected with the load end (100);
a third end of the control device (130) is connected with a memory device (133); and a fourth end of the control device (130) is connected with the governor (135), and the other end of the governor (135) is connected with an input power supply of the energy-saving brushless micro-kinetic power generator device (120), wherein,
the governor (135) adjusts the input power of the energy-saving brushless micro-kinetic power generator device (120) according to the power consumption of the load end (100).

2. The parallel control system of the energy-saving brushless micro-kinetic power generation device and the mains power supply device (10) according to claim 1, wherein the dual power switch (140) has a switching end, and the switching end is electrically connected with the control device (131).

3. The parallel control system of the energy-saving brushless micro-kinetic power generation device and the mains power supply device (10) according to claim 1, wherein the energy-saving brushless micro-kinetic power generation device (120) is composed of a plurality of single machine module brushless micro energy generator devices (200) connected in series.

4. The parallel control system of the energy-saving brushless micro-kinetic power generation device and the mains power supply device (10) according to claim 3, wherein the plurality of single machine module brushless micro energy generator devices (200) is connected in series through a rotating shaft (203).

5. The parallel control system of the energy-saving brushless micro-kinetic power generation device and the mains power supply device (10) according to claim 3, wherein the plurality of single machine module brushless micro motion energy generator device (200) comprises a stator core (205) and a pair of first rotors (212-1) and second rotors (212-2) arranged adjacent to each other on both sides of the stator core (205), wherein the first rotor (212-1) and the second rotor (212-2) are fixedly connected to both sides of the stator core (205) through a connecting device.

6. The parallel control system of the energy-saving brushless micro-kinetic power generation device and the mains power supply device (10) according to claim 5, wherein the governor (135) is used to adjust the speed of the first rotor (212-1) and the second rotor (212-2) in the energy-saving brushless micro-kinetic power generator device (120).

7. The parallel control system of the energy-saving brushless micro-kinetic power generation device and the mains power supply device (10) according to claim 5, wherein the stator core (205) is a hollow disc body (211), and a plurality of adjacent positioning slots (213) are arranged on both sides of the disc body (211) around the hollow, and a high back electromotive force winding is arranged on the positioning slot (213).

8. The parallel control system of the energy-saving brushless micro-kinetic power generation device and the mains power supply device (10) according to claim 1, wherein an excitation device is further configured in the energy-saving brushless micro-kinetic power generation device (120) to adjust the excitation current of the energy-saving brushless micro-kinetic power generator device (120).

9. A parallel control system, which is composed of an energy storage battery pack (300), an energy-saving brushless micro-kinetic power generation device (120) and a mains power supply device (110) connected in parallel by a control module, and provides the power required by the load end (100) through a dual power switch, the parallel control system comprises:
a control module is composed of a control device (131), a memory device (133) and an inverter device (137); wherein,
a first end of the control device (131) is connected with one end of the dual power switch (140);
a second end of the control device (131) is connected with the load end (100);
a third end of the control device (131) is connected with the memory device (133);
a fourth end of the control device (131) is connected with the dual power switch (140); and
a fifth end of the control device (131) is connected with one end of the inverter device (137); wherein,
the other end of the inverter device (137) is connected with the output end of the energy-saving brushless micro-kinetic power generation device (120) and the energy storage battery pack (300);
the dual power switch (140) is further connected with the output end of the mains power supply device (110) and the inverter device (137); wherein,
according to the power demand of the load end (100), the inverter device (137) adjusts the DC input power supply of the energy-saving brushless micro-kinetic power generation device (120) or the energy storage battery pack (300) to the power consistent with the mains power supply device (110) through the boost circuit.

10. The parallel control system according to claim 9, wherein another end of the inverter device (137) is connected with an input end of the energy storage battery pack (300).

11. The parallel control system according to claim 9 further comprises a change-over switch for connecting the solar panel (115) and the backup battery pack.

12. The parallel control system according to claim 9, wherein the energy storage battery pack (300) is an energy storage module of a solar panel (115).

13. The parallel control system according to claim 9, wherein the energy storage battery pack (300) is an energy storage battery pack (300) formed by lithium iron phosphate battery.

14. The parallel control system according to claim 9, wherein the energy-saving brushless micro-kinetic power generator device (120) is composed of a plurality of single machine module brushless micro-kinetic power generators (200) connected in series.

15. The parallel control system according to claim 14, wherein the plurality of single machine module brushless micro-kinetic power generators (200) is connected in series through a rotating shaft (203).
